# EUROPÄISCHE PATENTSCHRIFT

(11) **EP 0 794 119 B1**
(45) Veröffentlichungstag und Bekanntmachung des Hinweises auf die Patenterteilung: **15.09.1999**
(21) Anmeldenummer: 97103498.8
(22) Anmeldetag: 04.03.1997
(51) Int. Cl.: B64F 1/06, B63B 35/81, A63B 69/00

(54) **Vorrichtung zum Beschleunigen einer gleitenden oder rollenden abgestützten Person**
Device for accelerating a person supported on rolling or sliding devices
Dispositif pour accélérer une personne supportée sur dispositifs roulants ou glissants

(30) Priorität: 06.03.1996 DE 19608624
(43) Veröffentlichungstag der Anmeldung: 10.09.1997
(73) Patentinhaber: Schweizer, Joachim, 81739 München (DE)
(72) Erfinder: Schweizer, Joachim, 81739 München (DE)

(56) Entgegenhaltungen:
- BE-A- 377 992
- DE-A- 2 551 651
- US-A- 5 421 783
- PATENT ABSTRACTS OF JAPAN vol. 015, no. 276 (M-1135), 12.Juli 1991 & JP 03 095098 A (HONDA MOTOR CO LTD), 19.April 1991,

## Beschreibung

Die Erfindung betrifft eine Vorrichtung zum Beschleunigen einer Person gemäß dem Oberbegriff des Patentanspruchs 1 und deren Verwendung.

Eine derartige Vorrichtung ist aus der DE-34 03 048 A1 bekannt. Sie dient zum Starten von Hängegleitern und besteht im wesentlichen aus einem pneumatischen Zylinder, der über ein Getriebe und ein daran anschließendes Zugseil mit dem Hängegleiter verbindbar ist. Diese bekannte Vorrichtung weist jedoch den Nachteil auf, daß mit ihr nur relativ geringe Startgeschwindigkeiten erreicht werden können, die durch die Leistungsfähigkeit des Pneumatikzylinders begrenzt sind. Für viele Anwendungen, wie beispielsweise das Starten eines Hängegleiters bei geringem Aufwind oder das Beschleunigen eines Skifahrers, reicht die mit dieser Vorrichtung erzielbare Geschwindigkeit nicht aus. Außerdem ist die gesamte Vorrichtung bedingt durch den großen Pneumatikzylinder relativ unhandlich und damit schwer zu transportieren.

Aufgabe der Erfindung ist es, eine Vorrichtung der eingangs genannten Art zu schaffen, die einfach aufgebaut ist und mit der für eine Person hohe Geschwindigkeiten auch auf kurzer, horizontaler Strecke erreichbar sind.

Diese Aufgabe wird mit den Merkmalen des Anspruchs 1 gelöst.

Die Verwendung eines dehnungselastischen Materials für das Zugseil bietet zusammen mit den Spannmitteln die Möglichkeit, die zum Beschleunigen der Person erforderliche Energie im Zugseil zu speichern. Dazu wird das Zugseil zunächst gedehnt, was allerdings mit geringer Geschwindigkeit und folglich geringer Leistung bewerkstelligt werden kann. Anschließend wird das Zugseil in seiner Lage arretiert und mit der zu beschleunigenden Person verbunden. Nach dem Öffnen der Arretierung wird die im Zugseil gespeicherte elastische Energie auf die Person übertragen und diese somit beschleunigt. Da diese Energieabgabe relativ rasch erfolgt, kann die Person zu relativ hohen Geschwindigkeiten beschleunigt werden. Es ist dabei unerheblich, ob die Person selbst am Zugseil gehalten ist, was beispielsweise bei Skifahrern die Regel ist, oder ob eine die Person aufnehmende Transportvorrichtung, wie beispielsweise ein Wagen oder ein Hängegleiter, mit dem Zugseil verbunden wird.

Gemäß Anspruch 2 ist es vorteilhaft, als Spannmittel ein Spannseil und eine daran angreifende Zugvorrichtung einzusetzen. Insbesondere bei der Verwendung eines Fahrzeugs als Zugvorrichtung könnte zwar auf ein eigenes Spannseil verzichtet werden, das Fahrzeug nimmt in diesem Fall das Zugseil selbst an den Haken, jedoch würde das Fahrzeug in diesem Fall jene Trasse befahren, die die zu beschleunigende Person benutzen muß. Dies wird durch die Verwendung eines eigenen Spannseils vermieden. Vorzugsweise zieht die Zugvorrichtung in Längsrichtung des Zugseils. Alternativ könnten jedoch auch Umlenkrollen für das Spannseil vorgesehen sein, die eine beliebige, von der Richtung des Zugseils abweichende Richtung des Spannseils erlauben. Dies ist insbesondere dann vorzusehen, wenn die örtlichen Gegebenheiten ein Ziehen des Spannseils längs des Zugseils unmöglich machen.

Gemäß Anspruch 3 ist es günstig, die lösbare Kupplung von einem Achter und einem diesen durchdringenden Startseil zu bilden. Auf diese Weise läßt sich die Verbindung zwischen dem Zugseil und dem Spannseil besonders leicht realisieren. Das Startseil stellt dabei die kraftschlüssige Verbindung zwischen dem Spannseil und dem Zugseil her.

Vorzugsweise wird das Startseil gemäß Anspruch 4 mittels eines unter Last lösbaren Knotens am Achter arretiert, um den Kraftfluß zwischen dem Zugseil und dem Spannseil während des Dehnens des Zugseils sicherzustellen. Nach dem Erreichen der gewünschten Dehnung des Zugseils wird dieser Knoten gelöst und damit die Kupplung geöffnet, so daß die Person beschleunigt wird.

Das dehnbare Zugseil besitzt zu Beginn der Beschleunigung die größte Zugkraft. Dies hat zur Folge, daß die zu beschleunigende Person im Moment des Lösens der Kupplung einen starken Ruck und damit eine erhebliche Belastung erfährt, die zu unkontrollierten Handlungen oder gar zum Sturz der Person führen könnte. Um dies zu vermeiden, weist die Kupplung gemäß Anspruch 5 eine Bremsvorrichtung auf. Diese Bremsvorrichtung wirkt vorzugsweise nur in der Anfangsphase der Beschleunigung. Die Person wird daher zunächst mäßig beschleunigt, bis sie eine bestimmte Geschwindigkeit erreicht hat, wonach die volle, verbleibende Zugkraft des Zugseils auf sie einwirkt. Das Einsetzen der vollen Zugkraft ist dann aber nicht mehr so problematisch wie in der Anfangsphase, da die Person in diesem Fall schon eine beträchtliche Geschwindigkeit besitzt, was die Belastung und damit die Sturzgefahr entsprechend mindert. Außerdem hat die Zugkraft des Zugseils bis zu diesem Zeitpunkt bereits etwas nachgelassen.

Gemäß Anspruch 6 wird die Bremsvorrichtung vorteilhaft durch den Achter und das Startseil der lösbaren Kupplung realisiert, wobei das Startseil die Öse des Achters mehrfach kreuzungsfrei durchdringt. Das Startseil ist daher nach dem Öffnen der Kupplung auf Reibung gehalten und verhindert damit in der Anfangsphase eine zu heftige Beschleunigung. Die Dauer der Bremswirkung dieser Bremsvorrichtung wird durch die Länge des aus der Öse des Achters frei heraushängenden Startseils festgelegt. Sobald das gesamte Startseil durch den Achter durchgelaufen ist, wird die Bremswirkung aufgehoben und die Person durch die gesamte verbleibende Zugkraft des Zugseils beschleunigt. Die Bremswirkung kann durch unterschiedliche Oberflächenbeschaffenheit des Achters variiert werden. Zusätzlich ist es auch vorstellbar, das Spannseil derart auszubilden, daß seine Oberfläche zum freien Ende hin mit einer sich verbessernden Gleitfähigkeit ausgestattet ist. Dadurch wird erreicht, daß die Bremskraft zwischen dem Startseil und dem Achter mit zunehmendem Beschleunigungsweg abnimmt, so daß der Ruck beim Erreichen des Spannseilendes weitgehend eleminiert ist.

Eine besonders günstige Verbindung der Person mit dem Zugseil ergibt sich gemäß Anspruch 7, indem die Person an einem am Zugseil festgelegten Schleppseil gehalten ist. Dieses Schleppseil weist eine größere Länge als das Startseil auf Dies verhindert, daß die Person versehentlich über das Startseil fährt, da sich dieses stets vor ihr befindet. Die Verbindung der Person mit dem Schleppseil kann beispielsweise durch eine Wasserskihantel erfolgen, an der sich die Person festhält. Alternativ sind auch Bügel vorstellbar, wie sie von Schleppliften bekannt sind. Soll das Schleppseil mit einer die Person aufnehmenden Transportvorrichtung verbunden werden, so kann die Verbindung über eine von Segelflugzeugen her bekannte ausklinkbare Kupplung erfolgen.

Um eine möglichst hohe Geschwindigkeit zu erzielen, muß das Zugseil möglichst weit gedehnt werden. Andererseits ist es gefährlich, das Zugseil zu überdehnen, da dann die Gefahr eines Zugseilrisses besteht. Es ist deshalb wichtig, das Zugseil bis zu einer exakt vorbestimmten Zugkraft zu dehnen. Dies könnte beispielsweise dadurch geschehen, daß das Fahrzeug bis zu einer bestimmten, vorher markierten Stelle fährt, oder die Seilwinde nur bis zu einer bestimmten Stellung gedreht wird. Einfacher und sicherer ist es jedoch, wenn gemäß Anspruch 8 zwischen dem Fixpunkt und der Zugvorrichtung eine die Spannkraft erfassende Meßvorrichtung vorgesehen ist. Vorzugsweise befindet sich die Meßvorrichtung direkt am Zugfahrzeug, so daß der Fahrzeugführer direkt die Spannkraft des Zugseils ablesen und seine Fahrweise hierauf abstimmen kann. Auf diese Weise kann die gewünschte Zugkraft sehr exakt eingestellt werden, so daß die Elastizität des Zugseils besonders gut ausgenutzt werden kann, ohne gleichzeitig einen Seilriß befürchten zu müssen.

Gemäß Anspruch 9 ist es vorteilhaft, diese Vorrichtung zum Beschleunigen eines Ski-, Snowboard-, Rollschuhfahrers oder eines Rollerskaters zu verwenden. Zum alpinen Ski- oder Snowboardfahren ist üblicherweise ein entsprechend profiliertes Gelände, d.h. ein Hang notwendig. Diese Sportarten konnten daher ausschließlich im Gebirge ausgeübt werden. Durch die Verwendung der Beschleunigungsvorrichtung kann ein Ski- oder Snowboardfahrer auch ohne Hang auf eine entsprechend hohe Geschwindigkeit beschleunigt werden. Diese reicht dann im allgemeinen aus, um eine mittlere Sprungschanze zu überspringen oder sich in einem Half-pipe auszutoben. Im Fall eines Rollschuhfahrers oder eines Rollerskaters ergeben sich durch die Verwendung dieser Vorrichtung neuartige Möglichkeiten, da Geschwindigkeiten erreicht werden können, die bisher nicht für möglich gehalten wurden. Damit sind für Rollschuhfahrer bzw. Rollerskater sportliche Betätigungen möglich, deren Umfang noch nicht erfaßbar ist.

Schließlich ist gemäß Anspruch 10 die Verwendung der Vorrichtung zum Starten eines Drachenfliegers oder Fallschirmgleiters günstig. Durch die hohe erreichbare Endgeschwindigkeit ist mit dieser Vorrichtung auch im Flachland ein sicherer Start eines Drachen- oder Fallschirmgleiters möglich, der dann unter Ausnutzung von Aufwinden weiter aufsteigen kann.

Die erfindungsgemäße Vorrichtung und deren Verwendung wird anhand der Zeichnung beispielhaft erläutert, ohne den Schutzumfang zu beschränken.

Es zeigt:
- Figur 1: eine Vorrichtung zum Beschleunigen einer Person,
- Figur 2: einen Ausschnitt aus Figur 1 mit einer lösbaren Kupplung in arretierter Lage und
- Figur 3: die lösbare Kupplung gemäß Figur 2 in geöffneter Lage.

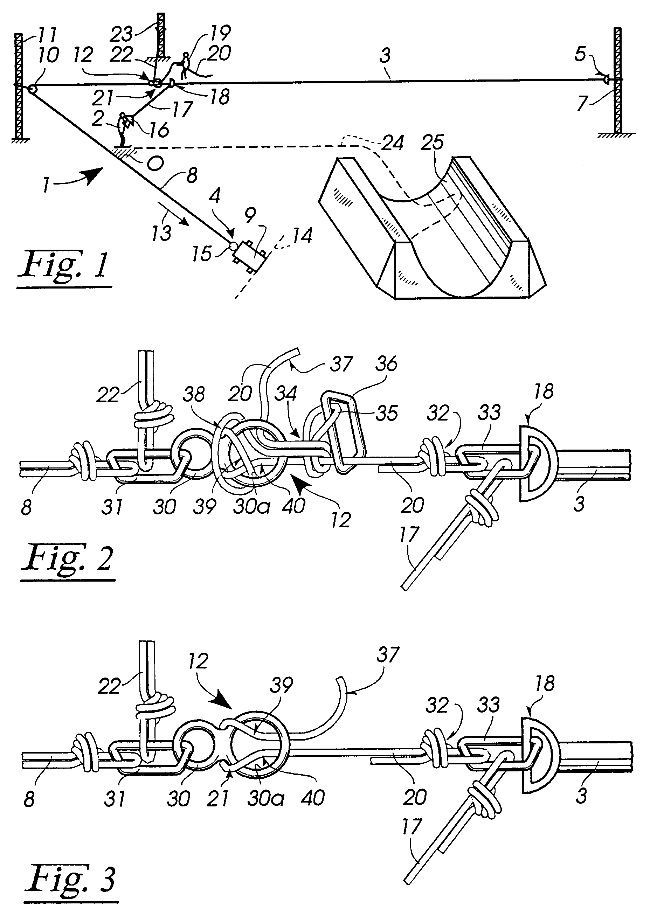

Eine Vorrichtung 1 gemäß Figur 1 zum Beschleunigen einer auf einer Oberfläche O gleitend abgestützten Person 2 besteht im wesentlichen aus einem Zugseil 3 und Spannmitteln 4. Das Zugseil 3 besteht aus einem dehnelastischen Material wie beispielsweise Gummi. Es ist derart ausgebildet, daß es mindestens auf seine doppelte, vorzugsweise vierfache Länge gedehnt werden kann. Ein Ende 5 des Zugseils 3 an einem Fixpunkt 7 festgelegt. Als Fixpunkt 7 kommt jeder hinreichend stabile Haltepunkt in Betracht, der der maximalen Spannkraft des Zugseils 3 sicher widersteht. Dies kann beispielsweise, wie dargestellt, ein Liftmast oder aber eine Ankerschraube sein.

Die Spannmittel 4 werden von einem Spannseil 8 und einer Zugvorrichtung 9 gebildet. Die Zugvorrichtung 9 könnte eine Winde oder, wie hier dargestellt, ein Fahrzeug sein. Sie übt über das Spannseil 8 auf das Zugseil 3 eine Zugkraft aus und dehnt dieses. Vorzugsweise zieht die Zugvorrichtung 9 das Spannseil 8 in Richtung der Längserstreckung des Zugseils 3. Alternativ kann je nach den örtlichen Gegebenheiten eine Umlenkung des Spannseils 8 über eine Umlenkrolle 10 vorteilhaft sein. In diesem Fall kann die Fahrtrichtung des die Zugvorrichtung 9 bildenden Fahrzeuges unabhängig von der Langsrichtung des Zugseils 3 gewählt werden. Hierzu muß die Umlenkrolle 10 an einem weiteren, stabilen Fixpunkt 11 festgelegt sein.

Um die Person 2 zu beschleunigen, wird zunächst das Zugseil 3 mit dem Spannseil 8 über eine Kupplung 12 verbunden. Anschließend bewegt sich das Fahrzeug 9 in Richtung des Pfeiles 13 und dehnt damit das Zugseil 3. Hat das Fahrzeug 9 eine vorher festgelegte Markierung 14 erreicht, so ist das Zugseil 3 bis zur Sollspannung gedehnt, worauf das Fahrzeug 9 anhält. Alternativ könnte der Fahrer des Fahrzeuges 9 die Spannkraft des Zugseils 3 anhand einer am Fahrzeug 9 angebrachten Kraftmeßvorrichtung 15 überprüfen und bei Erreichen einer gewünschten Spannkraft anhalten.

Nun ergreift die zu beschleunigende Person 2, die im vorliegenden Fall ein Snowboard-oder Skifahrer ist, eine Wasserskihantel 16, die über ein Schleppseil 17 am Gegenende des Zugseils 3 befestigt ist. Ein Starter 19 löst die Kupplung 12 zwischen dem Zugseil 3 und dem Spannseil 8. Hierauf sind das Gegenende 18 des Zugseils 3 und das Spannseil 8 über ein Startseil 20 verbunden, das in einer Bremsvorrichtung 21 der Kupplung 12 gleitend gehalten ist. Sobald der Starter 19 das Startseil 20 freigibt, läuft dieses durch die Bremsvorrichtung 21 durch, so daß das Ende 18 des Zugseils 3 und damit die Person 2 zunächst sanft beschleunigt wird. Sobald das gesamte Startseil 20 durch die Bremsvorrichtung 21 gelaufen ist, ist die Person 2 der gesamten, noch verbleibenden Zugkraftwirkung des gespannten Zugseils 3 ausgesetzt und erfährt daher eine entsprechend stärkere Beschleunigung. Durch die Bremsvorrichtung 21 wird daher erreicht, daß die Person 2 beim Einsetzen der vollen Zugkraft des Zugseils 3 bereits eine beträchtliche Geschwindigkeit besitzt, so daß sie keine Probleme beim Festhalten der Wasserskihantel 16 hat. Außerdem wird die Sturzgefahr der Person 2 durch diese Maßnahme erheblich reduziert. Um zu verhindern, daß die Person 2 über das Startseil 20 fährt, ist dieses entsprechend kürzer als das Schleppseil 17 ausgebildet. Um auch zu verhindern, daß die Person 2 nach dem Durchlaufen des Startseils 20 von der Kupplung 12 mit der Bremsvorrichtung 21 getroffen wird, ist diese über ein Positionsseil 22 an einem weiteren Fixpunkt 23 derart gehalten, daß die Kupplung 12 nach oben gezogen wird.

Hat die Person 2 durch die beschleunigende Wirkung des Zugseils 3 eine bestimmte Gechwindigkeit erreicht, so hat sich die Zugkraft des Zugseils 3 soweit reduziert, daß eine weitere Beschleunigung der Person 2 nicht mehr möglich ist. Die Person 2 ist daher schneller als das Schleppseil 17, läßt die Wasserskihantel 16 los und bewegt sich mit Hilfe der gewonnenen Geschwindigkeit entlang einer frei wählbaren Bahn 24 im Gelände. Auf dieser Bahn 24 könnte beispielsweise eine Sprungschanze vorgesehen sein, für die die Person 2 eine entsprechend hohe Anfährtsgeschwindigkeit benötigt. Alternativ könnte, wie dargestellt, eine sogenannte 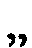 Half-pipe" 25 vorgesehen sein. Diese besteht aus einer etwa 10 bis 15 m breiten Rinne mit halbkreisförmigem Querschnitt. In dieser 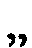 Half-pipe" 25 kann dann die Person 2 akrobatische Schwünge und Sprünge ausführen. Da die erforderliche Geschwindigkeit der Person 2 durch die Vorrichtung 1 erzeugt wird, ist kein Hang erforderlich, um die Person 2 zu beschleunigen. Man ist daher unabhängig von lokalen Gegebenheiten, so daß Sportarten, die bisher ausschließlich im Gebirge ausgeübt werden konnten, nun auch im Flachland zur Anwendung kommen können.

Figur 2 zeigt einen Ausschnitt aus Figur 1 mit der Kupplung 12 zwischen dem Zugseil 3 und dem Spannseil 8. Diese Kupplung 12 weist im wesentlichen einen Achter 30 auf, der vom Startseil 20 mehrfach durchdrungen ist. Ein Karabiner 31 ist in den Achter 30 eingehängt und nimmt einerseits das Spannseil 8 und andererseits das Positionsseil 22 auf. Ein Ende 32 des Startseils 20 ist zusammen mit dem Schleppseil 17 in einem weiteren Karabiner 33 festgelegt. Dieser weitere Karabiner 33 stellt die Verbindung zum Gegenende 18 des Zugseils 3 her.

Das Startseil 20 ist am Achter 30 über einen speziellen, unter Last lösbaren Knoten 34 festgelegt. Um den Knoten 34 in seinem Aufbau deutlich erkennen zu können, ist der Achter 30 gegenüber dem Startseil 20 vergrößert dargestellt. Zusätzlich ist der Knoten 34 in lockerer Weise gezeichnet, um den Verlauf des Startseils 20 leichter verfolgen zu können. Der Knoten 34 besitzt eine Schlaufe 35, die von einem Sicherungskarabiner 36 durchdrungen ist. Dieser Sicherungskarabiner 36 umschlingt wiederum jenen Abschnitt des Startseils 20, der über den Karabiner 33 zum Gegenende 18 des Zugseils 3 führt. Der Sicherungskarabiner 36 gewährleistet damit, daß sich die Schlaufe 35 nicht durch den Knoten 34 hindurchzieht, worauf sich dieser lösen könnte.

Nachdem der Knoten 34 wie in Figur 2 dargestellt geknüpft und der Sicherungskarabiner 36 eingehängt ist, sind die Karabiner 31 und 33 kraftschlüssig miteinander verbunden und die Kupplung 12 daher geschlossen. In dieser Lage kann das Zugseil 3 von der Zugvorrichtung 9 gedehnt werden. Ist die gewünschte Dehnung erreicht, so wird der aus dem Achter 30 herausreichende Ende 37 des Startseils 20 durch den Starter 19 erfaßt und der Sicherungskarabiner 36 entfernt, worauf die Schlaufe 35 durch den Knoten 34 hindurchgeschoben wird. Die Schlaufe 35 wird anschließend auch durch eine Öse 30a des Achters 30 gezogen und die über diesen verlegte Windung 38 des Startseils 20 abgenommen. Nach dem anschließenden Entkreuzen der beiden durch die Öse 30a des Achters 30 geführten Stränge 39, 40, nimmt das Startseil 20 die in Figur 3 dargestellte Lage ein. Das Startseil 20 durchdringt dabei die Öse 30a des Achters 30 doppelt und ist in einer Schlaufe zwischen beiden Ösen des Achters 30 geführt. Das Startseil 20 ist nun durch den Achter 30 auf Reibung gehalten und muß durch den Starter 19 festgehalten werden.

Beim kontrollierten Nachgeben des Startseils 20 durch den Starter 19 läuft dieses durch den Achter 30 reibend hindurch. Dies gewährleistet eine sanfte Beschleunigung der Person 2, bis das gesamte Startseil 20 durch den Achter 30 gelaufen ist. Erst anschließend wirkt die ungeminderte, verbleibende Zugkraft des Zugseils 3 auf die Person 2, die damit auf die gewünschte Endgeschwindigkeit beschleunigt wird.

### Bezugszeichenliste

- 1: Vorrichtung
- 2: Person
- 3: Zugseil
- 4: Spannmittel
- 5: Ende des Zugseils
- 7: Fixpunkt
- 8: Spannseil
- 9: Zugvorrichtung
- 10: Umlenkrolle
- 11: Fixpunkt
- 12: Kupplung
- 13: Pfeil
- 14: Markierung
- 15: Meßvorrichtung
- 16: Wasserskihantel
- 17: Schleppseil
- 18: Gegenende des Zugseils
- 19: Starter
- 20: Startseil
- 21: Bremsvorrichtung
- 22: Positionsseil
- 23: Fixpunkt
- 24: Bahn
- 25: Half-pipe
- 30: Achter
- 30a: Öse des Achters
- 31: Karabiner
- 32: Ende des Startseils
- 33: Karabiner
- 34: Knoten
- 35: Schlaufe
- 36: Sicherungskarabiner
- 37: Ende des Startseils
- 38: Windung
- 39, 40: Strang
- O: Oberfläche

## Patentansprüche

1. Vorrichtung zum Beschleunigen einer gleitend oder rollend auf einer Oberfläche (O) abgestützten Person (2) mittels eines Zugseils (3), an dem die Person (2) oder eine die Person (2) aufnehmende Transportvorrichtung lösbar gehalten ist, welches mit Spannmitteln (4) in Wirkverbindung steht, **dadurch gekennzeichnet**, daß das Zugseil (3) mindestens über einen Teilbereich aus einem dehnungselastischen Material besteht, einerseits an einem Fixpunkt (7) festgelegt und andererseits von den das Zugseil (3) dienenden Spannmitteln (4) und von der Person (2) oder deren Transportvorrichtung erfaßt ist, wobei die Spannmittel (4) über eine lösbare Kupplung (12) mit dem Zugseil (3) verbunden sind.

2. Vorrichtung nach Anspruch 1, **dadurch gekennzeichnet**, daß die Spannmittel (4) von einem Spannseil (8) und einer daran angreifenden Zugvorrichtung (9), vorzugsweise einem Fahrzeug oder einer Winde gebildet sind.

3. Vorrichtung nach Anspruch 1, **dadurch gekennzeichnet**, daß die lösbare Kupplung (12) von einem am Spannseil (4) festgelegten Achter (30) und einem am Zugseil (3) festgelegten Startseil (20) gebildet ist, wobei das Startseil (20) eine Öse (30a) des Achters (30) mehrfach durchdringt.

4. Vorrichtung nach Anspruch 3, **dadurch gekennzeichnet**, daß bei geschlossener Lage der Kupplung (12) das Startseil (20) mittels eines unter Last lösbaren Knotens (34) am Achter (30) arretiert ist.

5. Vorrichtung nach mindestens einem der Ansprüche 1, 3 und 4, **dadurch gekennzeichnet**, daß die lösbare Kupplung (12) eine die Beschleunigung der Person (2) begrenzende Bremsvorrichtung (21) aufweist.

6. Vorrichtung nach mindestens einem der Ansprüche 1 und 3 bis 5, **dadurch gekennzeichnet**, daß bei offener, gebremster Lage der Kupplung (12) das Startseil (20) die Öse (30a) des Achters (30) mehrfach kreuzungsfrei durchdringt und auf Reibung gehalten ist, wobei das freie Ende (37) des Startseils (20) aus der Öse (30a) des Achters (30) heraushängt.

7. Vorrichtung nach Anspruch 1 und/oder 3, **dadurch gekennzeichnet**, daß am Zugseil (3) die Person (2) oder deren Transportvorrichtung mit einem Schleppseil (17) gehalten ist, welches eine größere Länge als das Startseil (20) aufweist.

8. Vorrichtung nach mindestens einem der Ansprüche 1 bis 7, **dadurch gekennzeichnet**, daß zwischen dem Fixpunkt (7) und der Zugvorrichtung (9) eine die Spannkraft des Zugseils (3) erfassende Meßvorrichtung (15) vorgesehen ist.

9. Verwendung der Vorrichtung nach mindestens einem der Ansprüche 1 bis 8 zum Beschleunigen eines Ski-, Snowboard-Rollschuhfahrers oder eines Rollerskaters aus dem Stand in der Ebene, wobei die Beschleunigung in der Anfangsphase durch eine Bremsvorrichtung (21) stets unterhalb eines vorgegebenen Grenzwertes bleibt.

10. Verwendung der Vorrichtung nach mindestens einem der Ansprüche 1 bis 8 zum Starten eines Drachenfliegers oder Fallschirmgleiters aus dem Stand in der Ebene.

## Claims

1. Device for acceleration of a person, who is supported by gliding or rolling on a surface (O) by means of a pulling rope (3) with which the person (2) or a transportation device for the person (2) is connected in such a way that the transportation device can be disconnected. The transportation device is connected to the tension devices (4), characterised by the fact that the pulling rope (3) at least partially consists of a flexible elastic material and is attached to a fixed point (7) on the one side, and to the tension devices (4) serving the pulling rope (3) and the person (2) or their transportation device on the other side, whereby the tension devices (4) are connected to the pulling rope (3) by means of a coupling (12) which can be disconnected.

2. Device according to claim 1, characterised by the fact that the tension devices (4) consist of a tension rope (8) and a pulling device connected to it (9), the latter preferably being a vehicle or a winch.

3. Device according to claim 1, characterised by the fact that the coupling (12), which can be disconnected, consists of a tension rope (4) which runs through the abseil device (30) and a starting rope (20) which is connected to the pulling rope (3), whilst the starting rope (20) runs through the loop (30a) of the abseil device (30) several times.

4. Device according to claim 3, characterised by the fact that the starting rope (20) is locked at the abseil device (30) by means of a knot (34) which can be undone when under a load, whilst the coupling (12) remains in a closed position.

5. Device according to at least one of the claims1, 3, and 4, characterised by the fact that the coupling (12), which can be disconnected, has a braking device (21) limiting the acceleration of the person (2).

6. Device according to at least one of the claims1, 3, and 4, characterised by the fact that the starting rope (20) runs through the loop (30a) of the abseil device (30) several times, without crossing itself and is held through friction when the coupling (12) is in an open, braking position. The free end (37) of the starting rope (20) hangs out of the loop (30a) of the abseil device (30).

7. Device according to claim 1 and/or claim 3, characterised by the fact that the person (2) or the their transportation device connected to the pulling rope (3), is held by a towing rope (17) which has a greater length than the starting rope (20).

8. Device according to at least one of the claims 1-7, characterised by the fact that in between the fixed point (7) and the pulling device (9) a measuring device (15) is attached, which measures the tension of the pulling rope (3).

9. Employment of the device according to at least one of the claims 1-8 in order to accelerate a skiing, snowboarding or rollerskating person or a rollerskating person from a standing position on a plane level, whereby the acceleration always remains below the required limits during the first phase of acceleration because of the braking device (21).

10. Employment of the device according to at least one of the claims 1-8 in order to take off with a hang-glider or para-glider from a standing position on a plane level.

## Revendications

1. Dispositif pour accélérer une personne (2) butée sur une surface (O) de manière glissante ou roulante à partir d'un câble de traction (3), alors que la personne (2) ou encore un dispositif de transport recevant la personne(2) est tenue de manière détachable. Le câble de traction (3) se trouve en liaison d'action avec des moyens de tension (4). Caractérisé de sorte que le câble de traction (3) est composé au-dessus d'un domaine partiel au moins d'un matériel extensible, d'une part fixé à un point fixe (7) et d'autre part saisi par les moyens de tension (4), servants au câble de tension (3) et par la personne (2) ou de son dispositif de transport, de sorte, que les moyens de tension (4) soient liés au câble de tension (3) à partir d'un coupleur détachable (12).

2. Dispositif selon revendication 1. caractérisé de sorte, que les moyens de tension (4) soient formés à partir d'un câble tendeur (8) et d'un mécanisme de halage (9), de préférence d'un véhicule ou d'un treuil, qui y est appliqué.

3. Dispositif selon revendication 1. caractérisé de sorte, que le coupleur détachable (12) soit formé à partir d'un crochet en huit (30), fixé au câble de tension (4) et d'un câble de départ (20) fixé au câble de traction (3), de sorte que le câble de départ pénètre un oeillet (30a) du crochet en huit (30) à plusieurs reprises.

4. Dispositif selon revendication 3. caractérisé de sorte, que lors de coupleur (12) fermé, le câble de départ (20) est arrêté au crochet en huit (30) à l'aide d'un noeud (34) détachable sous charge.

5. Dispositif selon au moins une des revendications 1, 3, et 4. caractérisé de sorte, que le coupleur détachable (12) offre un dispositif de freinage (21), limitant l'accélération de la personne (2).

6. Dispositif selon au moins une des revendications 1, 3, jusqu'à 5. caractérisé de sorte, que lors de coupleur (12) freiné et ouvert, le câble de départ (20) pénètre à plusieurs reprises l'oeillet (30a) du crochet en huit (30) sans croisement et qu'il est tenu sur frottement, et que la fin libre (37) du câble de départ (20) sorte de l'oeillet (30a) du crochet en huit (30).

7. Dispositif selon revendication 1 et/ou 3. caractérisé de sorte, que la personne (2) ou son dispositif de transport soit tenu au câble de traction (3) à partir d'un câble de remorque (17), qui est plus long que le câble de départ (20).

8. Dispositif selon au moins une des revendications 1. à 7. caractérisé de sorte, qu'un dispositif de mesure (15), saisissant la force de tension du câble de traction (3), soit prévu entre le point fixe (7) et le mécanisme de halage (9).

9. Application du dispositif selon au moins une des revendications 1. à 8. pour accélération d'un skieur, surfeur de neige ou d'un patineur à roulettes de pied ferme au plan, de sorte que grâce à un dispositif de freinage (12), l'accélération du début reste toujours inférieure à une valeur limite définie.

10. Application du dispositif selon au moins une des revendications 1. à 8. pour lancement d'un libériste ou parapente de pied ferme au plan.
